# EUROPEAN PATENT APPLICATION

(11) **EP 4 632 907 A2**
(43) Date of publication of application: **15.10.2025**
(21) Application number: 25161090.3
(22) Date of filing: 28.02.2025
(51) Int. Cl.: H01M 50/244, H01M 50/358, H01M 50/503

(54) **BATTERY PACK**

(30) Priority: 19.03.2024 KR 20240037763
(71) Applicant: SAMSUNG SDI CO., LTD., Yongin-si, Gyeonggi-do 17084 (KR)
(72) Inventor: HWANG, Ho Ryong, 16678 Suwon-si (KR); HA, Jun Hwan, 16678 Suwon-si (KR); HONG, Ki Sung, 16678 Suwon-si (KR)
(74) Representative: Marks & Clerk LLP

(57) **Abstract**

A battery pack includes a housing, a plurality of battery cells in the housing and each comprising a vent hole, a first holder in the housing and configured to support a side of each of the battery cells, a first connection member facing the first holder and electrically connected to the battery cells, and a guide in the first connection member and configured to guide a flow of an emission discharged from the vent hole.

## Description

### BACKGROUND

### 1. Field

Aspects of embodiments of the present disclosure relate to a battery pack.

### 2. Discussion of Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. The secondary battery includes an electrode assembly including a positive electrode and a negative electrode, a case accommodating the electrode assembly, an electrode terminal connected to the electrode assembly, and the like.

The secondary battery may be used as a battery pack formed of a plurality of unit battery cells connected in series and/or parallel to provide high energy density. The battery pack may be formed by connecting electrode terminals of a plurality of unit batteries to each other to meet a required amount of power and to implement a high-power secondary battery of, for example, an electric vehicle.

The above-described information disclosed in the technology that forms the background of the present disclosure is provided to improve understanding of the background of the present disclosure, and thus may include information that does not constitute the related art.

### SUMMARY

According to aspects of embodiments of the present disclosure, a battery pack capable of smoothly, or easily, discharging emissions generated from a battery cell if the battery cell ignites, and capable of preventing (preventing or substantially preventing) chain ignition of the battery cells is provided.

The above and other aspects and features of the present disclosure will be described in or will be apparent from the following description of some embodiments of the present disclosure.

According to one or more embodiments of the present disclosure, a battery pack includes a housing, a plurality of battery cells in the housing and each comprising a vent hole, a first holder in the housing and configured to support a side of each of the battery cells, a first connection member facing the first holder and electrically connected to the battery cells, and a guide in the first connection member and configured to guide a flow of an emission discharged from the vent hole.

The first holder may include a first holder body, a plurality of first insertion holes, which pass through the first holder body and in which the battery cells are respectively inserted, and a transfer hole passing through the first holder body, connected to the first insertion hole, and facing the vent hole.

The first holder body may include a first partition arranged around (e.g., to surround) the first insertion hole, and a second partition extending from the first partition and arranged around (e.g., to surround) the transfer hole, wherein the second partition may protrude outward from a battery cell of the plurality of battery cells.

Each of the battery cells may include a cell case accommodating an electrode assembly, and a cap-up which is coupled to the cell case and in which the vent hole extends, and the first connection member may include a tab body seated on the first holder body, and a connection tab extending from the tab body and connected to the cap-up.

The connection tab may include a first extension part extending from the tab body and facing the transfer hole, a second extension part extending from the first extension part and inserted in the transfer hole, and a third extension part extending from the second extension part and in contact with the cap-up.

The cap-up may include an inner body, an outer body arranged coaxially with the inner body, and a plurality of bridges between the inner body and the outer body and configured to support the inner body with respect to the outer body, and the vent hole may be between adjacent bridges of the plurality of bridges.

A distance between the first holder body and the second extension part may be greater than a distance between the first holder body and the inner body.

A length of the second extension part may be greater than or equal to 1 mm and less than or equal to 3 mm.

A width of the third extension part may be less than a diameter of the inner body.

An end portion of the third extension part may be on the inner body.

The guide may include a chamber between the first holder body and the connection tab, and a slit extending through the connection tab and connected to the chamber and the transfer hole.

Opposite sides of the chamber may be open and connected to the transfer hole.

The slit may extend such that a longitudinal direction thereof is parallel to a longitudinal direction of the connection tab.

A width of the slit may be greater than or equal to 0.8 mm and less than or equal to 1.2 mm.

The slit may include a first slit passing through the first extension part, a second slit connected to the first slit and passing through the second extension part, and a third slit connected to the second slit and passing through the third extension part.

An end portion of the first slit may face the outer body.

The battery pack may further include a second holder spaced apart from the first holder and configured to support another side of each of the battery cells, and a protective member between the first holder and the second holder and arranged around (e.g., to surround) each of the battery cells.

The protective member may include a first protective member extending from the first holder toward the second holder, and a second protective member extending from the second holder toward the first holder and in contact with the first protective member.

The battery pack may further include a plurality of blocking members, each facing a battery cell of the plurality of battery cells and configured to cover the vent hole.

Each of the blocking members may be separated from the vent hole as the emission is discharged from the vent hole.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is an exploded perspective view schematically illustrating a configuration of a battery pack according to an embodiment of the present disclosure;
FIG. 2 is a cross-sectional view schematically illustrating a configuration of the battery pack of FIG. 1;
FIG. 3 is a perspective view schematically illustrating a configuration of a battery cell according to an embodiment of the present disclosure;
FIG. 4 is a cross-sectional view schematically illustrating a configuration of the battery cell of FIG. 3;
FIG. 5 is a perspective view schematically illustrating a configuration of a first connection member and a guide member according to an embodiment of the present disclosure;
FIG. 6 is a plan view schematically illustrating a configuration of the first connection member and the guide member of FIG. 5;
FIG. 7 is a front cross-sectional view schematically illustrating a configuration of the first connection member and the guide member of FIG. 5;
FIG. 8 is a side cross-sectional view schematically illustrating a configuration of the first connection member and the guide member of FIG. 5;
FIGS. 9 and 10 are views schematically illustrating an operating process of the battery pack according to an embodiment of the present disclosure;
FIG. 11 is a view schematically illustrating a configuration of a battery pack according to another embodiment of the present disclosure;
FIG. 12 is a view schematically illustrating an operating state of the battery pack of FIG. 11;
FIG. 13 is a view schematically illustrating a configuration of a battery pack according to another embodiment of the present disclosure; and
FIG. 14 is a view schematically illustrating an operating state of the battery pack of FIG. 13.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

Herein, in describing the present disclosure with reference to a plurality of embodiments, duplicate descriptions may be omitted for components that are the same or identical or correspond to each other across the plurality of embodiments. For example, when a component the same or identical to or corresponding to a component disclosed in one embodiment is disclosed in another embodiment, the corresponding component may be omitted from the description of another embodiment, and the description may focus on a component that is different from that in one embodiment.

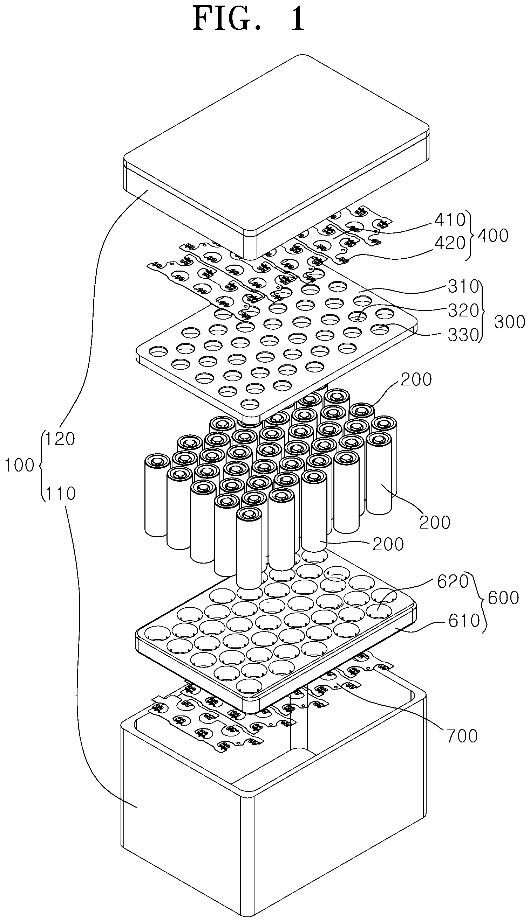

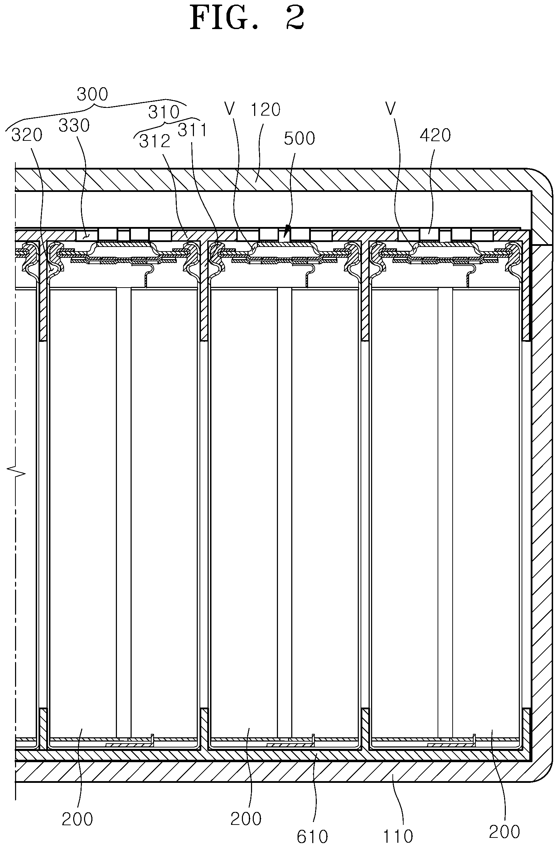

FIG. 1 is a perspective view schematically illustrating a configuration of a battery pack according to an embodiment of the present disclosure; and FIG. 2 is a cross-sectional view schematically illustrating a configuration of the battery pack of FIG. 1.

Referring to FIGS. 1 and 2, a battery pack according to the present embodiment includes a housing 100, a battery cell 200, a first holder 300, a first connection member 400, and a guide member, or guide, 500.

The housing 100 forms a schematic exterior of the battery pack and provides a space in which the battery cell 200 may be accommodated.

The housing 100 may include a housing body 110 and a cover 120.

The housing body 110 may be formed to have a generally box shape, with an empty interior and a side open. The open side of the housing body 110 may be disposed to face upward. However, a cross-sectional shape of the housing body 110 is not limited to a quadrangular shape, as shown in FIG. 1, and may be varied in design to have any of various suitable shapes, such as any of a polygonal shape, a circular shape, and an oval shape.

The cover 120 may be coupled to the housing body 110 and may close an internal space of the housing body 110. As an example, the cover 120 may be formed to have a generally plate shape and may be disposed to face the open side of the housing body 110, that is, an upper side of the housing body 110. The cover 120 may be fixed to the housing body 110 by any of various types of coupling methods, such as any of bolting, welding, and fitting coupling. In an embodiment, a thickness of the cover 120 may be formed to be equal to a thickness of the housing body 110.

The battery cell 200 may be a unit structure, which stores and supplies power, in the battery pack.

Herein, a case in which the battery cell 200 is a lithium-ion secondary battery and has a cylindrical shape will be described as an example. However, the present disclosure is not limited thereto, and the battery cell 200 may be a lithium-polymer battery or a prismatic-type battery, for example.

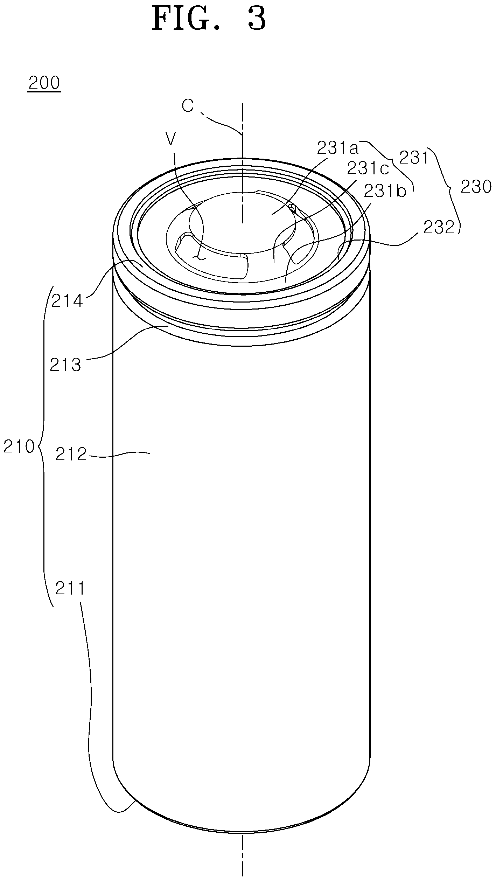

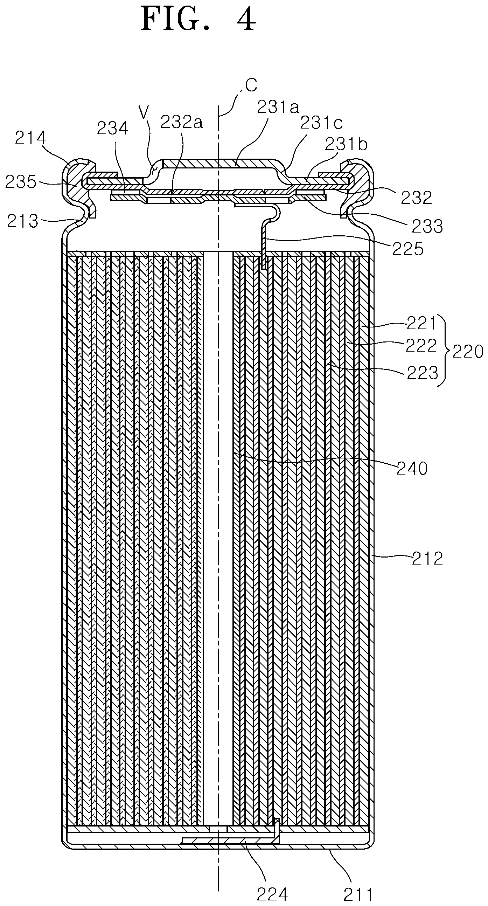

FIG. 3 is a perspective view schematically illustrating a configuration of the battery cell according to an embodiment of the present disclosure; and FIG. 4 is a cross-sectional view schematically illustrating a configuration of the battery cell of FIG. 3.

Referring to FIGS. 3 and 4, the battery cell 200 may include a cell case 210, an electrode assembly 220, and a cap assembly 230.

The cell case 210 may include a bottom part 211 with a generally circular shape and a side wall part 212 extending by a length (e.g., a certain length) upward from the bottom part 211. In an embodiment, the cell case 210 may be made of steel, a steel alloy, nickel-plated steel, a nickel-plated steel alloy, aluminium, or an aluminium alloy.

During an assembly process of the battery cell 200, an upper portion of the cell case 210 may be open. Thus, in an embodiment, during the assembly process of the battery cell 200, the electrode assembly 220 may be integrated into one structure and inserted into the cell case 210. Thereafter, an electrolyte may be additionally injected into the cell case 210.

A beading part 213 recessed toward a central axis of the cap assembly 230 may be formed on an upper side of the cell case 210 to prevent or substantially prevent the cap assembly 230 from being separated to the outside. The beading part 213 may be disposed at a lower portion of the cap assembly 230. A crimping part 214 bent around (e.g., to surround) an edge of the cap assembly 230 may be formed on an upper portion of the beading part 213.

The electrode assembly 220 may be accommodated inside the cell case 210. The electrode assembly 220 may include or be referred to as an electrode, an electrode group, or a jelly roll. The electrode assembly 220 may include a negative electrode plate 221 coated with a negative electrode active material (e.g., graphite, carbon, or the like), a positive electrode plate 222 coated with a positive electrode active material (e.g., a transition metal oxide (e.g., LiCoO₂, LiNiO₂, LiMn₂O₄, or the like)), and a separator 223 located between the negative electrode plate 221 and the positive electrode plate 222 to prevent or substantially prevent a short circuit and allow only lithium ions to move. In an embodiment, the negative electrode plate 221, the positive electrode plate 222, and the separator 223 may be wound in a generally cylindrical shape. In some examples, the negative electrode plate 221 may be a copper (Cu) foil, the positive electrode plate 222 may be an aluminium (Al) foil, and the separator 223 may be polyethylene (PE) or polypropylene (PP).

In an embodiment, a negative electrode tab 224 may be welded to the negative electrode plate 221. The negative electrode tab 224 may protrude and extend downward by a length (e.g., a certain length) from the electrode assembly 220. In an embodiment, a positive electrode tab 225 may be welded to the positive electrode plate 222. The positive electrode tab 225 may protrude and extend upward by a length (e.g., a certain length) from the electrode assembly 220. In an embodiment, the negative electrode tab 224 may be made of copper (Cu) or nickel (Ni), and the positive electrode tab 225 may be made of aluminium (Al).

In an embodiment, the negative electrode tab 224 may be welded to the bottom part 211 of the cell case 210. Thus, the cell case 210 may operate as a negative electrode. In some examples, the negative electrode tab 224 may be ultrasonically or laser welded to the bottom part 211 of the cell case 210. However, in an embodiment, the positive electrode tab 225 may be welded to the bottom part 211 of the cell case 210, and, in this case, the cell case 210 may operate as a positive electrode.

The electrode assembly 220 may further include a center pin 240. In an embodiment, the center pin 240 may have a hollow circular pipe shape and may be coupled to the center or approximately to the center of the electrode assembly 220. In an embodiment, the center pin 240 may be made of steel, stainless steel, aluminium, an aluminium alloy, or polybutylene terephthalate, but a material thereof is not limited thereto. The center pin 240 may suppress deformation of the electrode assembly 220 during charging and discharging of the battery cell 200. The center pin 240 may function as a passage for a gas generated inside the secondary battery to move therethrough. However, in some cases, the center pin 240 may be omitted.

The cap assembly 230 may seal an opening of the cell case 210 to protect the electrode assembly 220 from an external environment. If an internal pressure of the cell case 210 rises above a reference pressure due to a thermal runaway or ignition of the battery cell 200, the cap assembly 230 may be broken to release an internal gas of the cell case 210 to the outside. In some examples, the cap assembly 230 may function as a positive electrode terminal.

The cap assembly 230 may include a cap-up 231, a vent plate 232, and a cap-down 233.

The cap-up 231 may function as a terminal electrically connected to an external device. In some examples, the cap-up 231 may function as a positive electrode terminal.

A vent hole V may be formed in the cap-up 231. The vent hole V may discharge an internal gas to the outside if an abnormal internal pressure is generated inside the cell case 210, such as due to overcharging or the like. In an embodiment, the cap-up 231 may be made of aluminium or an aluminium alloy.

As an example, the cap-up 231 may include an inner body 231a, an outer body 231b, and a bridge 231c.

The inner body 231a may form the exterior of a central portion of the cap-up 231. As an example, the inner body 231a may be formed to have a generally disk shape. The inner body 231a may be disposed such that a central axis thereof aligns with a central axis C of the cell case 210.

The outer body 231b may form an exterior of an edge of the cap-up 231. As an example, the outer body 231b may be formed to have a generally hollow ring shape. A diameter of the outer body 231b may be greater than a diameter of the inner body 231a. In an embodiment, the outer body 231b may be disposed coaxially with the inner body 231a. That is, a central axis of the outer body 231b may be disposed to be aligned with the inner body 231a and the central axis C of the cell case 210.

The inner body 231a and the outer body 231b may be disposed to be vertically spaced apart from each other. As an example, the outer body 231b may be disposed below the inner body 231a. However, the inner body 231a and the outer body 231b may be disposed on a same plane.

The bridge 231c is disposed between the inner body 231a and the outer body 231b, and may support the inner body 231a with respect to the outer body 231b. In an embodiment, the bridge 231c may be formed to have a bar shape with both, or opposite, end portions connected to an outer circumferential surface of the inner body 231a and an inner circumferential surface of the outer body 231b, respectively. A plurality of bridges 231c may be provided. The plurality of bridges 231c may be arranged to be spaced apart from each other at an interval (e.g., a set interval) along a circumference around the central axis C of the cell case 210. In an embodiment, the interval between the adjacent bridges 231c may be the same.

The vent hole V may be formed to have a shape of a hole formed to pass through the cap-up 231. As an example, the vent hole V may be formed to have the shape of a hole passing through a region between the inner body 231a and the outer body 231b. A plurality of vent holes V may be provided. Each of the plurality of vent holes V may be individually disposed between the adjacent bridges 231c. However, a number of the vent holes V is not limited to that shown in FIG. 3, and may be varied in design.

The vent plate 232 may be located below the cap-up 231. The vent plate 232 may be in close contact with, in contact with, coupled to, or connected to a lower portion of the cap-up 231. As an example, the vent plate 232 may be in close contact with, in contact with, coupled to, or connected to an edge of the cap-up 231, such as the outer body 231b, other than the center portion, such as the inner body 231a, that protrudes upward in the cap-up 231. In an embodiment, an end portion of the vent plate 232 may extend in a curved manner around (e.g., to surround) an end portion of the outer body 231b. In an embodiment, the vent plate 232 may be made of aluminium or an aluminium alloy.

The vent plate 232 may include a notch 232a. The notch 232a may be formed to be recessed (e.g., to a certain depth) from an outer side surface of the vent plate 232.

As an internal pressure of the battery cell 200 rises above a reference pressure (or a rupture pressure of the vent plate 232) due to a thermal runaway or ignition of the battery cell 200, the notch 232a may rupture, and emissions generated inside the cell case 210 may pass sequentially through the notch 232a and the vent hole V to be discharged to the outside. Here, the emissions discharged from the vent hole V may include at least one of flames, gases, and smoke.

The cap-down 233 may be disposed below the vent plate 232. The cap-down 233 may be in close contact with, in contact with, connected to, or coupled to the vent plate 232. The cap-down 233 may be electrically connected to the electrode assembly 220 through the positive electrode tab 225. The cap-down 233 may be electrically connected to the vent plate 232 and the cap-up 231. In an embodiment, the positive electrode tab 225 of the electrode assembly 220 may be welded to a lower surface of the cap-down 233. In some examples, the lower surface of the cap-down 233 may be ultrasonic and/or laser welded to the positive electrode tab 225. In some examples, the cap-down 233 may be made of aluminium or an aluminium alloy.

In some examples, in the event of a thermal runaway or ignition of the battery cell 200, the vent plate 232 may be deformed by the internal pressure of the cell case 210, and the cap-down 233 and the vent plate 232 may be electrically separated from each other.

A first insulating member 234 may be installed between the vent plate 232 and the cap-down 233. The first insulating member 234 may be located between an edge of the vent plate 232 and an edge of the cap-down 233. The first insulating member 234 may insulate between the cap-down 233 and the vent plate 232 if the vent plate 232 is deformed by the internal gas. In some examples, the first insulating member 234 may be formed of a resin material, such as polyethylene (PE), polypropylene (PP), or polyethylene terephthalate (PET), but a material thereof is not limited thereto.

A second insulating member 235 may be installed on an upper side of the cell case 210. The second insulating member 235 may be located between the end portion of the vent plate 232, which is around (e.g., surrounds) the outer body 231b of the cap-up 231, and the cell case 210. Both, or opposite, sides of the second insulating member 235 may be respectively in close contact with the end portion of the vent plate 232 and inner side surfaces of each of the crimping part 214 and the beading part 213. The second insulating member 235 may insulate between the cell case 210 and the cap assembly 230. The second insulating member 235 may be formed of a resin material, such as polyethylene (PE), polypropylene (PP), or polyethylene terephthalate (PET), but a material thereof is not limited thereto.

The battery cell 200 may be disposed inside the housing 100. As an example, the battery cell 200 may be disposed in an internal space of the housing body 110. The battery cell 200 may be disposed such that the bottom part 211 faces a bottom surface of the housing body 110 and the vent hole V faces the cover 120. However, the battery cell 200 is not limited to thereto, and may be disposed such that the bottom part 211 faces the cover 120 and the vent hole V faces the bottom surface of the housing body 110.

A plurality of battery cells 200 may be provided. The plurality of battery cells 200 may be disposed parallel to each other in the housing 100. The plurality of battery cells 200 may be disposed in any of various patterns inside the housing 100, such as a grid shape or a zigzag shape. A number of the battery cells 200 may be varied in design depending on the size of the housing 100 or the like.

The first holder 300 is disposed inside the housing 100 and supports a side of each of the plurality of battery cells 200. The first holder 300 may maintain an interval (e.g., a constant interval) between the plurality of battery cells 200.

The first holder 300 may include a first holder body 310, a first insertion hole 320, and a transfer hole 330.

The first holder body 310 may be formed to have a generally plate shape. As an example, the first holder body 310 may be seated on an upper side surface of each of the battery cells 200, in which the vent hole V is formed.

The first insertion hole 320 may provide a space, into which a side of the battery cell 200 is inserted, in the first holder body 310. As an example, the first insertion hole 320 may be formed to be recessed upward from a lower side surface of the first holder body 310. A cross-sectional area of the first insertion hole 320 may be larger than that of the battery cell 200. An upper end portion of the battery cell 200 on which the cap assembly 230 is formed may be inserted into the first insertion hole 320.

A plurality of first insertion holes 320 may be provided. The plurality of first insertion holes 320 may be disposed to be spaced apart from each other in the first holder body 310. In an embodiment, the upper end portions of the plurality of battery cells 200 may be individually inserted into different first insertion holes 320.

The transfer hole 330 may transfer emissions discharged from the vent hole V of the battery cell 200 to an internal space of the housing 100. The transfer hole 330 may be formed to be recessed downward from an upper side surface of the first holder body 310. A lower side surface of the transfer hole 330 may be connected to an upper side surface of the first insertion hole 320. Accordingly, the first insertion hole 320 and the transfer hole 330 may be formed to continuously pass through the first holder body 310 in a vertical direction.

The transfer hole 330 may be disposed to face the vent hole V of the battery cell 200 inserted into the first insertion hole 320. Accordingly, the emissions discharged from the vent hole V can be transferred to an external space of the housing 100 through the transfer hole 330.

A cross-sectional area of the transfer hole 330 may be smaller than the cross-sectional area of the first insertion hole 320. Accordingly, the upper end portion of the battery cell 200 inserted into the first insertion hole 320 may not protrude upward from the first holder body 310 through the transfer hole 330. In an embodiment, a diameter of the transfer hole 330 may be 13 mm, for example.

A plurality of transfer holes 330 may be provided. Each of the plurality of transfer holes 330 may be disposed at a position individually facing the first insertion hole 320 and the vent hole V.

The first holder body 310 may include a first partition 311 and a second partition 312.

The first partition 311 forms the exterior of a side of the first holder body 310 and may be disposed around (e.g., to surround) the first insertion hole 320. That is, the first partition 311 may refer to a lower side region of the first holder body 310, which is around (e.g., surrounds) the first insertion hole 320, among the entire region of the first holder body 310. The first partition 311 may be inserted into a space between the adjacent battery cells 200. Accordingly, the first partition 311 may ensure that an interval between the adjacent battery cells 200 is maintained at a constant size.

The second partition 312 may form the exterior of another side of the first holder body 310, and may be disposed around (e.g., to surround) the transfer hole 330. That is, the second partition 312 may refer to an upper side region of the first holder body 310, which is around (e.g., surrounds) the transfer hole 330, among the entire region of the first holder body 310.

The second partition 312 may protrude outward from the battery cell 200. That is, the second partition 312 may be disposed at a higher position than the vent hole V. As the cross-sectional area of the transfer hole 330 is smaller than the cross-sectional area of the first insertion hole 320, the second partition 312 may be seated on the upper side surface of the battery cell 200. The second partition 312 may function as a blocking wall that blocks a path through which emissions discharged from the vent hole V of one battery cell 200 flow into the vent hole V of the adjacent battery cell 200. Accordingly, the second partition 312 can prevent or substantially prevent chain ignition of the battery cells 200.

The first connection member 400 may be disposed to face the first holder 300 and may be electrically connected to the battery cells 200. The first connection member 400 may interconnect the plurality of battery cells 200 disposed inside the housing 100 in series or in parallel.

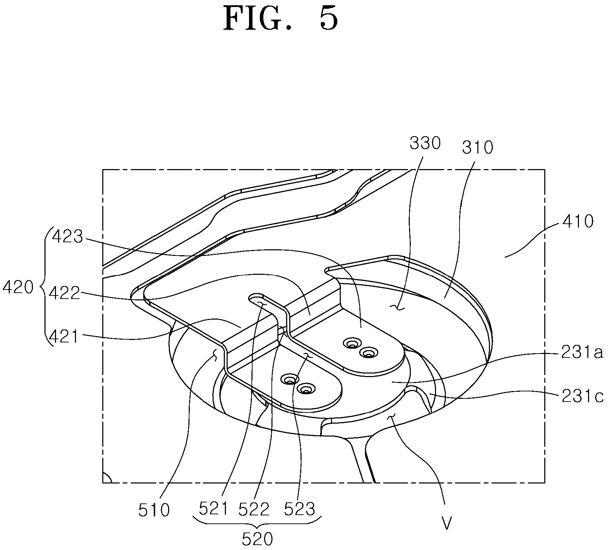

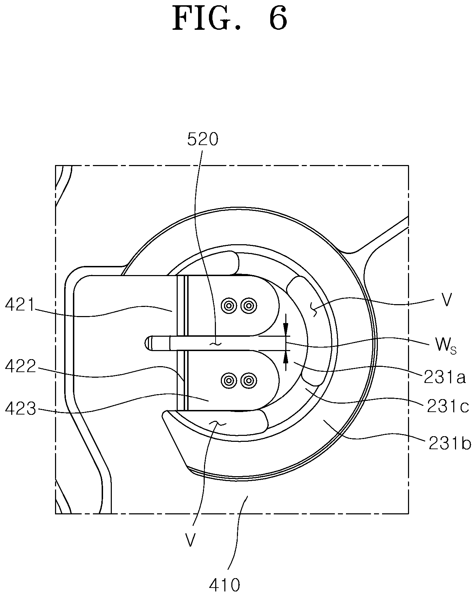

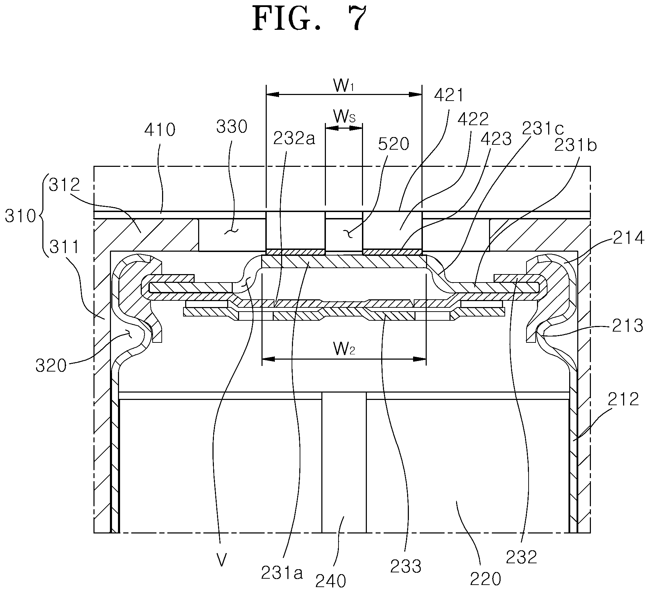

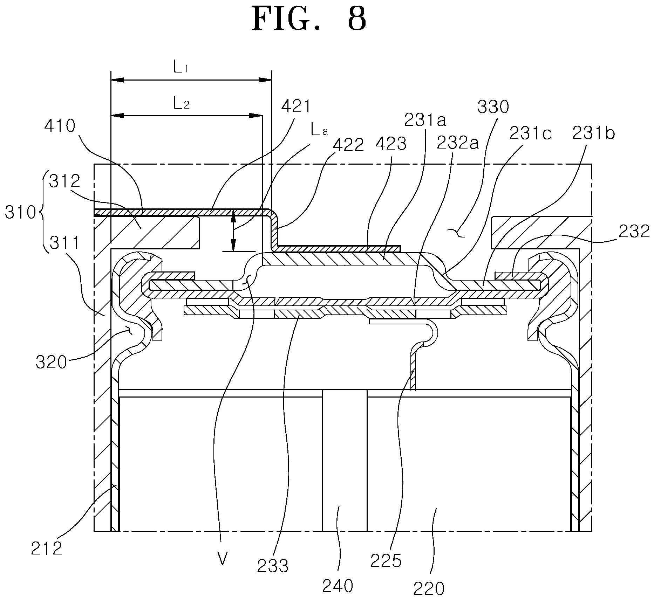

FIG. 5 is a perspective view schematically illustrating a configuration of a first connection member and a guide member according to an embodiment of the present disclosure; FIG. 6 is a plan view schematically illustrating a configuration of the first connection member and the guide member according to the embodiment of the present disclosure; FIG. 7 is a front cross-sectional view schematically illustrating a configuration of the first connection member and the guide member according to the embodiment of the present disclosure; and FIG. 8 is a side cross-sectional view schematically illustrating a configuration of the first connection member and the guide member according to the embodiment of the present disclosure.

Referring to FIGS. 1 to 8, the first connection member 400 may include a tab body 410 and connection tabs 420.

The tab body 410 may be seated on the first holder body 310, and may support the connection tabs 420. The tab body 410 may be formed to have a generally plate shape and may be seated on an upper surface of the first holder body 310. The tab body 410 may be fixed to the upper surface of the first holder body 310 by any of various types of coupling methods, such as welding, bonding, bolting, or fitting coupling. The tab body 410 may have a shape that does not directly face the transfer hole 330 formed through the first holder body 310.

The tab body 410 may be formed of an electrically conductive material, such as copper, nickel, aluminium, or the like. The tab body 410 may be electrically connected to an external terminal of the battery pack. The tab body 410 may collect power received from the connection tabs 420, which will be described below, and transfer the power to the external terminal of the battery pack, or distribute the power received from the external terminal of the battery pack to the connection tabs 420.

The tab body 410 may be formed as multiple pieces or as a single piece. In a case in which a plurality of tab bodies 410 are formed, the plurality of tab bodies 410 may be electrically connected to each other.

The connection tab 420 extends from the tab body 410 and may be connected to the cap-up 231 of the battery cell 200. A plurality of connection tabs 420 may be provided. The plurality of connection tabs 420 may extend from the tab body 410 toward different battery cells 200, and may be individually connected to the cap-ups 231 of the different battery cells 200. In an embodiment, the cap-up 231 functions as a positive electrode terminal, and the first connection member 400 may function as a component that electrically connects the positive electrodes of the battery cells 200 to each other.

The connection tab 420 may include a first extension part 421, a second extension part 422, and a third extension part 423.

In an embodiment, the first extension part 421 may extend from the tab body 410 and entirely support the second extension part 422 and the third extension part 423, which will be described below. An end portion of the first extension part 421 may be disposed to face the transfer hole 330 vertically. A longitudinal direction of the first extension part 421 may be disposed parallel to the tab body 410.

The second extension part 422 may extend from the first extension part 421 toward the transfer hole 330. As an example, the second extension part 422 may extend downward from the end portion of the first extension part 421 and may be inserted into the transfer hole 330. A longitudinal direction of the second extension part 422 may be disposed to intersect a longitudinal direction of the first extension part 421. As an example, the longitudinal direction of the second extension part 422 may be disposed perpendicular to the first extension part 421.

The third extension part 423 may extend from the second extension part 422 and may be in contact with the cap-up 231. As an example, the third extension part 423 may extend from an end portion of the second extension part 422 in a direction parallel to the longitudinal direction of the first extension part 421. A lower surface of the third extension part 423 may be in contact with an upper surface of the inner body 231a of the cap-up 231. The third extension part 423 may be fixed to the inner body 231a by any of various coupling methods, such as any of welding, fitting coupling, and bolting.

The first extension part 421, the second extension part 422, and the third extension part 423 may have a structure that minimizes or reduces an area facing the vent hole V to allow the emissions to be smoothly, or easily, discharged from the vent hole V.

As an example, a distance L₁ between the first holder body 310 and the second extension part 422 may be greater than a distance L₂ between the first holder body 310 and the inner body 231a. Here, the distance L₁ between the first holder body 310 and the second extension part 422 may refer to a distance between the first partition 311 and an inner side surface of the second extension part 422, and the distance L₂ between the first holder body 310 and the inner body 231a may refer to a distance between the first partition 311 and an outer circumferential surface of the inner body 231a. Accordingly, a lower end portion of the second extension part 422 may be disposed not to directly face the vent hole V, thereby preventing or substantially preventing interference with emissions discharged from the vent hole V.

In an embodiment, a length Lₐ of the second extension part 422 may be greater than or equal to 1 mm and less than or equal to 3 mm. If the length Lₐ of the second extension part 422 is less than 1 mm, an installation space for the guide member 500, which will be described below, may become excessively narrow. If the length Lₐ of the second extension part 422 is greater than 3 mm, a thickness of the first holder body 310 or the tab body 410 may be excessively increased, thereby reducing the overall energy density.

A width W₁ of the third extension part 423 may be less than a diameter W₂ of the inner body 231a. An end portion of the third extension part 423 may be disposed on the inner body 231a. Accordingly, the third extension part 423 does not protrude outward from the inner body 231a, and thus may not directly face the vent hole V disposed outside the inner body 231a.

The guide member 500 is provided in the first connection member 400, and may guide the flow of emissions discharged from the vent hole V. In other words, the guide member 500 may provide a path through which the emissions discharged from the vent hole V are smoothly, or easily, discharged to the outside of the transfer hole 330 without interfering with the first connection member 400.

The guide member 500 may include a chamber 510 and a slit 520.

The chamber 510 may be disposed between the first holder body 310 and the connection tab 420. As an example, the chamber 510 may refer to a space surrounded by the second partition 312, the first extension part 421, and the second extension part 422 among an inner side space of the first holder body 310, which faces the vent hole V. A lower side surface of the chamber 510 faces the vent hole V and may be connected to the vent hole V. Accordingly, emissions discharged from the vent hole V may flow into the inside of the chamber 510 without the flow thereof being blocked by the connection tab 420.

Both, or opposite, sides of the chamber 510 spaced apart from each other in a width direction of the connection tab 420 may be formed to be open. The chamber 510 may be connected to the transfer hole 330 through the open sides. Accordingly, the emissions flowing into the chamber 510 may be transferred to the transfer hole 330 through both, or opposite, sides of the chamber 510.

The slit 520 may be formed through the connection tab 420. The slit 520 may provide a path, through which the emissions flowing into the chamber 510 are transferred to the transfer hole 330, in the connection tab 420. Accordingly, the emissions flowing into the chamber 510 can be smoothly, or easily, transferred to the transfer hole 330 through the slit 520 and both, or opposite, sides of the chamber 510.

The slit 520 may be disposed such that a longitudinal direction thereof is parallel to a longitudinal direction of the connection tab 420. Here, the longitudinal direction of the connection tab 420 may not refer to any one direction, but may refer to a direction parallel to a direction extending continuously from the first extension part 421 toward the second extension part 422 and the third extension part 423. That is, the slit 520 has different sections that pass through the first extension part 421, the second extension part 422, and the third extension part 423, respectively, and the sections of the slit 520 may be disposed parallel to extending directions of the first extension part 421, the second extension part 422, and the third extension part 423, respectively.

As an example, the slit 520 may include a first slit 521, a second slit 522, and a third slit 523.

The first slit 521 may have a shape of a hole passing through the first extension part 421. A first end portion of the first slit 521 may be located at a boundary region between the first extension part 421 and the second extension part 422. A second end portion of the first slit 521 may extend from the first end portion of the first slit 521 in the extending direction of the first extension part 421. Here, the extending direction of the first extension part 421 may be a direction parallel to a radial direction of the inner body 231a. The second end portion of the first slit 521 may be disposed to face the upper surface of the outer body 231b. Accordingly, a length of the first slit 521, which is parallel to the extending direction of the first extension part 421, may be greater than a length of the vent hole V, which is parallel to the extending direction of the first extension part 421. The first slit 521 may be disposed to directly face the vent hole V vertically, or may be disposed to be offset from the vent hole V.

The second slit 522 may have a shape of a hole passing through the second extension part 422. A first end portion of the second slit 522 is located at the boundary region between the first extension part 421 and the second extension part 422, and may be connected to the first slit 521. A second end portion of the second slit 522 may extend from the first end portion of the second slit 522 in the extending direction of the second extension part 422. The second end portion of the second slit 522 may be located at a boundary region between the second extension part 422 and the third extension part 423.

The third slit 523 may have a shape of a hole passing through the third extension part 423. A first end portion of the third slit 523 is located at the boundary region between the second extension part 422 and the third extension part 423, and may be connected to the second slit 522. A second end portion of the third slit 523 may extend from the first end portion of the third slit 523 in the extending direction of the third extension part 423. The second end portion of the third slit 523 may pass through the end portion of the third extension part 423. Accordingly, the third extension part 423 may have a shape divided into two sides based on the third slit 523.

In an embodiment, a width Wₛ of the slit 520 may be greater than or equal to 0.8 mm and less than or equal to 1.2 mm. If the width Wₛ of the slit 520 is less than 0.8 mm, the emissions flowing into the chamber 510 may not pass through the slit 520 smoothly, or easily. If the width Wₛ of the slit 520 is greater than 1.2 mm, a width of the connection tab 420 may be excessively reduced and power may not be smoothly, or easily, transmitted between the tab body 410 and the battery cell 200. In an embodiment, the first slit 521, the second slit 522, and the third slit 523 may all be formed having a same width. As an example, the width of each of the first slit 521, the second slit 522, and the third slit 523 may be formed to be the same as the width Wₛ of the slit 520.

The battery pack according to the present embodiment may further include a second holder 600 and a second connection member 700.

The second holder 600 may be spaced apart from the first holder 300 and may support another side of each of the plurality of battery cells 200. The second holder 600, along with the first holder 300, may maintain an interval (e.g., a constant interval) between the plurality of battery cells 200.

The second holder 600 may include a second holder body 610 and a second insertion hole 620.

The second holder body 610 may be formed to have a substantially plate shape. The second holder body 610 may be disposed between the bottom surface of the housing body 110 and the bottom part 211 of the battery cell 200. Upper and lower surfaces of the second holder body 610 may be seated on the bottom part 211 of the battery cell 200 and the bottom surface of the housing body 110, respectively.

The second insertion hole 620 may provide a space, into which the other side of the battery cell 200 is inserted, in the second holder body 610. As an example, the second insertion hole 620 may be formed to be recessed downward from an upper side surface of the second holder body 610. A cross-sectional area of the second insertion hole 620 may be larger than that of the battery cell 200. A lower end portion of the battery cell 200 may be inserted into the second insertion hole 620.

A plurality of second insertion holes 620 may be provided. The plurality of second insertion holes 620 may be disposed to be spaced apart from each other in the second holder body 610. In an embodiment, the lower end portions of the plurality of battery cells 200 may be individually inserted into respective second insertion holes 620.

The second connection member 700 may be disposed to face the second holder 600 and may be electrically connected to the battery cells 200. The second connection member 700 may interconnect the plurality of battery cells 200 disposed inside the housing 100 in series or in parallel.

As an example, the second connection member 700 may be seated on the lower surface of the second holder body 610. The second connection member 700 may be fixed to the lower surface of the second holder body 610 by any of various types of coupling methods, such as welding, bonding, bolting, or fitting coupling. The second connection member 700 may be formed of an electrically conductive material, such as copper, nickel, aluminium, or the like.

A side of the second connection member 700 may be electrically connected to the bottom part 211 of each of a plurality of cell cases 210. In an embodiment, the cell case 210 functions as a negative electrode terminal, and the second connection member 700 may function as a component that electrically connects the negative electrodes of the battery cells 200 to each other. Another side of the second connection member 700 may be electrically connected to the external terminal of the battery pack.

Herein, an operation of the battery pack according to the present embodiment will be described.

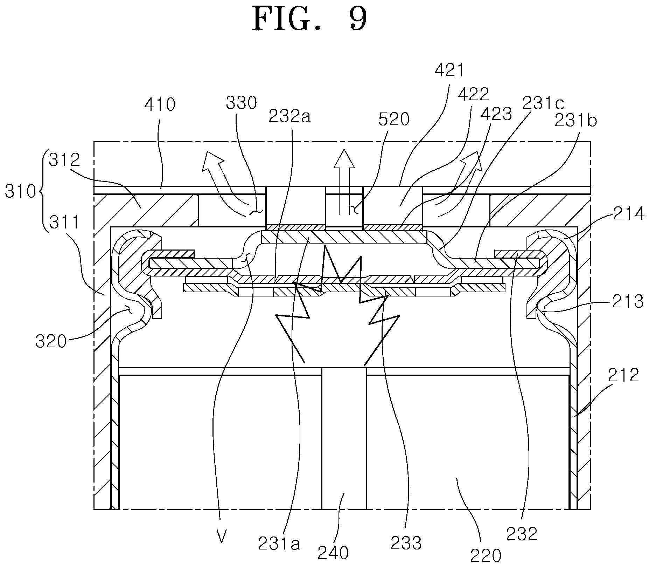

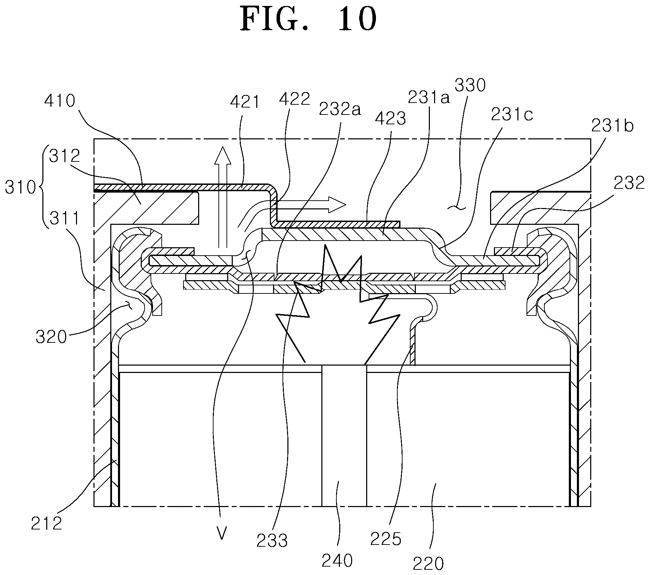

FIGS. 9 and 10 are views schematically illustrating an operating process of the battery pack according to an embodiment of the present disclosure.

Referring to FIGS. 9 and 10, in the event of a thermal runaway or ignition of the battery cell 200, emissions, such as flames, gases, smoke, and the like generated inside the battery cell 200 may be discharged to the outside of the battery cell 200 through the vent hole V.

The emissions discharged from the vent hole V, which does not directly face the connection tab 420, among the plurality of vent holes V are directly transferred to the transfer hole 330, and are discharged to the outside of the first holder 300 through the transfer hole 330.

The emissions discharged from the vent hole V, which faces the connection tab 420, among the plurality of vent holes V flow into the chamber 510 through the vent hole V.

The emissions flowing into the chamber 510 may be smoothly, or easily, transferred to the transfer hole 330 through the slit 520 and the open both, or opposite, sides of the chamber 510, and discharged to the outside of the first holder 300 through the transfer hole 330.

In this process, the emissions discharged from the vent hole V of any one battery cell 200 may be discharged to the outside of the first holder 300 without flowing into the vent hole V of an adjacent battery cell 200 since the second partition 312 is disposed at a higher position than the vent hole V.

Herein, a battery pack according to another embodiment of the present disclosure will be described.

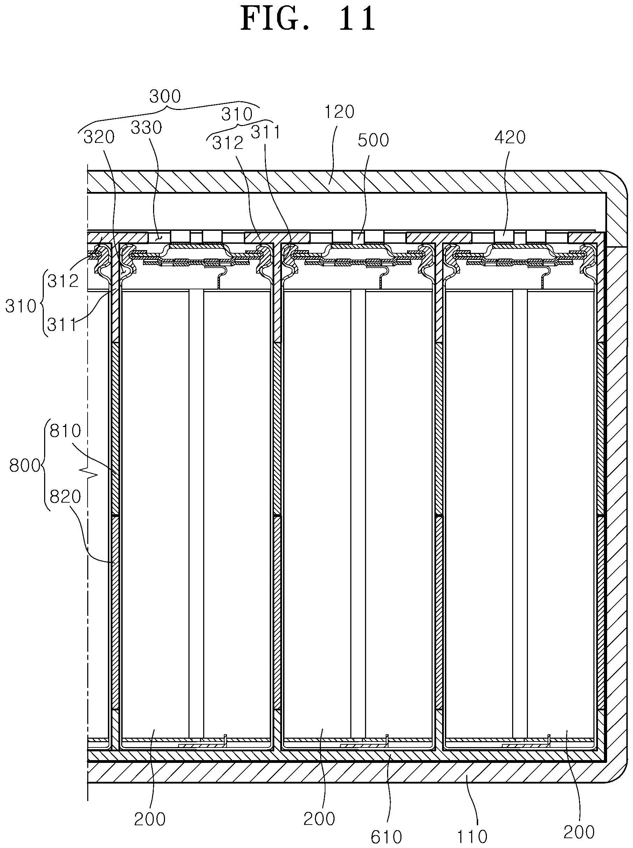

FIG. 11 is a view schematically illustrating a configuration of the battery pack according to another embodiment of the present disclosure.

Referring to FIG. 11, a battery pack according to the present embodiment may be configured to further include a protective member 800 in the battery pack according to the embodiment of FIG. 1.

The protective member 800 may be disposed between the first holder 300 and the second holder 600. The protective member 800 may be disposed around (e.g., to surround) the battery cell 200, more specifically, the side wall part 212 of the battery cell 200. That is, the protective member 800 may block emissions from being transferred between the side wall parts 212 of the adjacent battery cells 200 if the battery cell 200 ignites. Accordingly, the protective member 800 can prevent or substantially prevent chain ignition of the battery cells 200 resulting from damage or penetration of the side wall part 212 of the battery cell 200.

In an embodiment, a plurality of protective members 800 may be provided. Each of the plurality of protective members 800 may be individually disposed between paired adjacent battery cells 200.

In an embodiment, the protective member 800 may include a first protective member 810 and a second protective member 820.

The first protective member 810 may extend from the first holder 300 toward the second holder 600. As an example, the first protective member 810 may have a shape of a partition extending from a lower end portion of the first holder body 310, i.e., a lower end portion of the first partition 311, toward an upper end portion of the second holder body 610. In an embodiment, the first protective member 810 may be formed integrally with the first holder body 310, or may be manufactured as a separate component from the first holder body 310, and then inserted between the first holder 300 and the second holder 600.

The second protective member 820 may extend from the second holder 600 toward the first holder 300. As an example, the second protective member 820 may have a shape of a partition extending from the upper end portion of the second holder body 610 toward the lower end portion of the first holder body 310. An upper end portion of the second protective member 820 may be in contact with a lower end portion of the first protective member 810. Accordingly, the first protective member 810 and the second protective member 820 can seal a space between the side wall parts 212 of the adjacent battery cells 200.

In an embodiment, the second protective member 820 may be formed integrally with the second holder body 610, or may be manufactured as a separate component from the second holder body 610, and then inserted between the first holder 300 and the second holder 600.

In an embodiment, the first protective member 810 and the second protective member 820 may include a synthetic resin, a ceramic material, or the like that is insulating and heat-resistant.

Herein, an operation of the battery pack according to the present embodiment will be described.

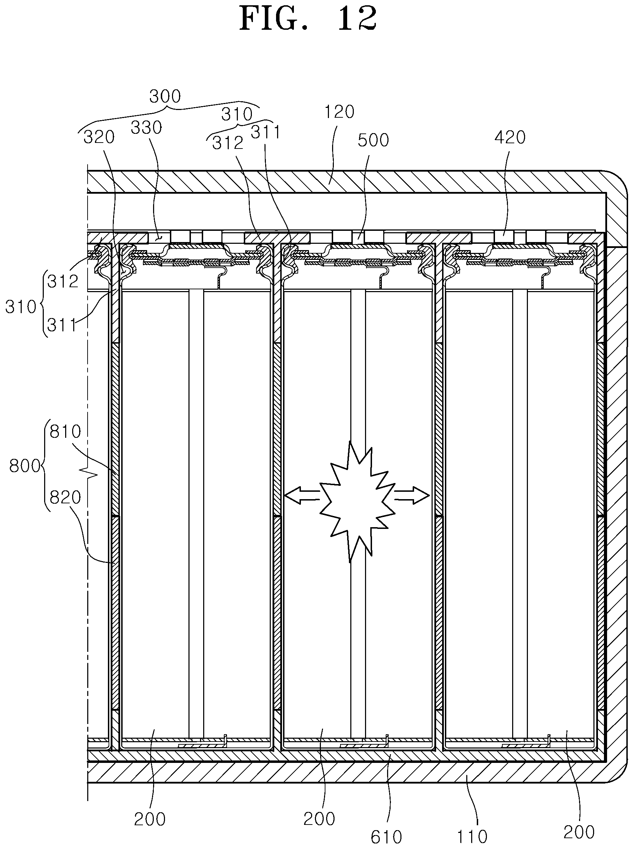

FIG. 12 is a view schematically illustrating an operating state of the battery pack of FIG. 11.

Referring to FIG. 12, if the battery cell 200 ignites, an internal pressure of the cell case 210 may rise excessively or the cell case 210 may be damaged by an external impact.

For example, when the side wall part of the cell case 210 is torn or a through hole is formed in the cell case 210, emissions, such as flames, gases, smoke, and the like are discharged to the outside of the battery cell 200 through the side wall part 212 of the battery cell 200 rather than through the vent hole V.

In this case, the emissions discharged from the side wall part 212 of any one battery cell 200 may flow toward an adjacent battery cell 200.

However, since the first protective member 810 and the second protective member 820 are disposed between the adjacent battery cells 200, a flow of the emissions discharged from the side wall part 212 of any one battery cell 200 may be blocked by the first protective member 810 and the second protective member 820 and may not be transferred to the adjacent battery cell 200.

Accordingly, a temperature rise of the ignited battery cell 200 and the adjacent battery cell 200 may be suppressed, and chain ignition of the battery cells 200 may be prevented or substantially prevented.

Herein, a battery pack according to another embodiment of the present disclosure will be described.

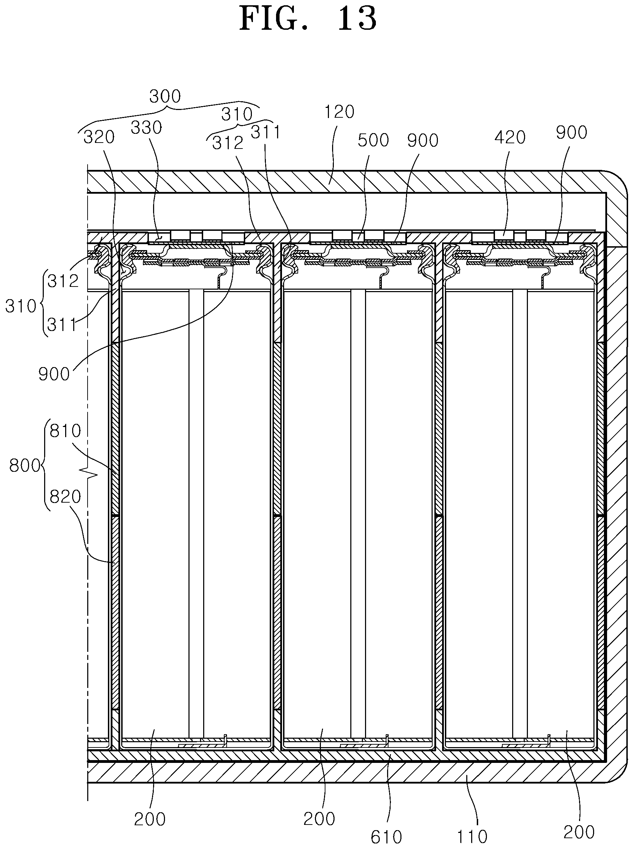

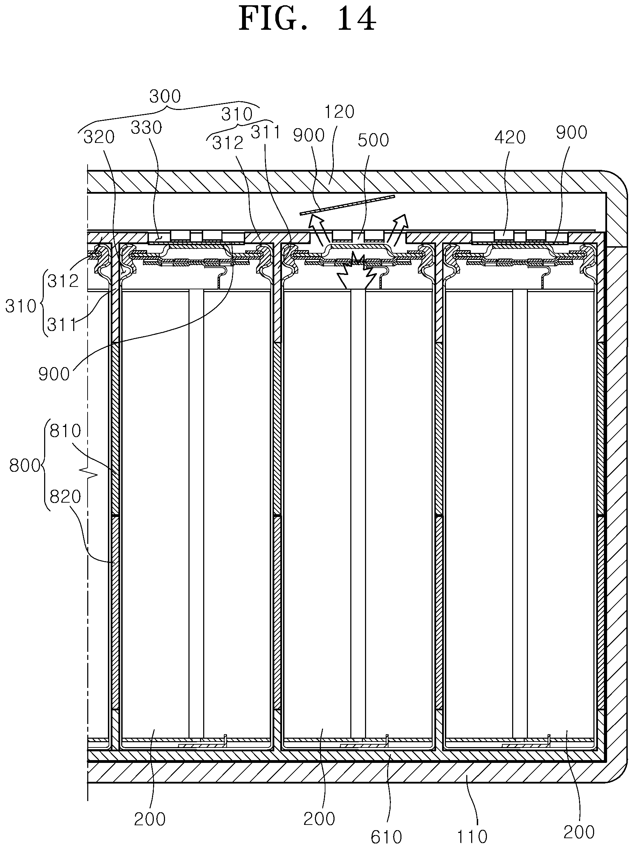

FIG. 13 is a view schematically illustrating a configuration of a battery pack according to another embodiment of the present disclosure; and FIG. 14 is a view schematically illustrating an operating state of the battery pack o FIG. 13.

Referring to FIGS. 13 and 14, a battery pack according to the present embodiment may be configured to further include a blocking member 900 in the battery pack according to the embodiments of FIG. 1 or FIG. 11.

In FIGS. 13 and 14, a case in which the battery pack according to the present embodiment includes the protective member 800 is illustrated as an example, but the battery pack according to the present embodiment may also be configured not to include the protective member 800.

The blocking member 900 may be disposed to face the battery cell 200 and cover the vent hole V. A plurality of blocking members 900 may be provided. In an embodiment, the plurality of blocking members 900 may be disposed to individually cover the vent holes V of respective battery cells 200.

The blocking member 900 may close the vent hole V during normal operation of the battery cell 200. Accordingly, the blocking member 900 may block emissions discharged from the battery cell 200, if one of the battery cells 200 ignites, from flowing into the vent hole V of the adjacent battery cell 200.

The blocking member 900 may include a material that is insulating, heat-resistant, or fire-resistant. For example, the blocking member 900 may include at least one of silicone, polystyrene, polyurethane, polyethylene, vinyl chloride, a ceramic material, and the like.

In an embodiment, the blocking member 900 may be manufactured in the form of a sheet and then attached to the cap assembly 230 of the battery cell 200. In another embodiment, the blocking member 900 may be applied in a liquid state on the cap assembly 230 of the battery cell 200 and then cured.

If the battery cell 200 ignites, the blocking member 900 may be separated from the vent hole V by pressure of the emissions discharged from the vent hole V, thereby opening the vent hole V. An area of the blocking member 900 may be smaller than an area of the transfer hole 330. Accordingly, the blocking member 900 can be easily separated to the outside of the transfer hole 330 if the battery cell 200 ignites.

According to one or more embodiments of the present disclosure, a first connection member has a structure with a minimum or reduced overlapping area with a vent hole, and a guide member is formed on the first connection member, such that emissions generated from a battery cell can be discharged smoothly, or easily, if the battery cell ignites.

According to one or more embodiments of the present disclosure, a height of a second partition is higher than a height of a vent hole, such that emissions discharged from a battery cell can be transferred to an adjacent battery cell, thereby preventing or substantially preventing chain ignition of the battery cells.

According to one or more embodiments of the present disclosure, a protective member around (e.g., surrounding) a side wall part of a battery cell is installed between a first holder and a second holder, such that if the side wall part of the battery cell is damaged, emissions can be transferred between the first holder and the second holder, thereby preventing or substantially preventing chain ignition of a plurality of battery cells.

According to one or more embodiments of the present disclosure, a blocking member can prevent or substantially prevent emissions generated if a battery cell ignites from flowing into vent holes of remaining battery cells.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Embodiments are set out in the following clauses:
Clause 1. A battery pack comprising:
   a housing;
   a plurality of battery cells in the housing and each comprising a vent hole;
   a first holder in the housing and configured to support a side of each of the battery cells;
   a first connection member facing the first holder and electrically connected to the battery cells; and
   a guide in the first connection member and configured to guide a flow of an emission discharged from the vent hole.
Clause 2. The battery pack of clause 1, wherein the first holder comprises:
   a first holder body;
   a plurality of first insertion holes, which pass through the first holder body and in which the battery cells are respectively inserted; and
   a transfer hole passing through the first holder body, connected to the first insertion hole, and facing the vent hole.
Clause 3. The battery pack of clause 2, wherein the first holder body comprises:
   a first partition around the first insertion hole; and
   a second partition extending from the first partition and arranged around the transfer hole,
   wherein the second partition protrudes outward from a battery cell of the plurality of battery cells.
Clause 4. The battery pack of clause 3, wherein each of the battery cells comprises:
   a cell case accommodating an electrode assembly; and
   a cap-up which is coupled to the cell case and in which the vent hole extends, and
   the first connection member comprises:
      a tab body seated on the first holder body; and
      a connection tab extending from the tab body and connected to the cap-up.
Clause 5. The battery pack of clause 4, wherein the connection tab comprises:
   a first extension part extending from the tab body and facing the transfer hole;
   a second extension part extending from the first extension part and inserted in the transfer hole; and
   a third extension part extending from the second extension part and in contact with the cap-up.
Clause 6. The battery pack of clause 5, wherein the cap-up comprises:
   an inner body;
   an outer body arranged coaxially with the inner body; and
   a plurality of bridges between the inner body and the outer body and configured to support the inner body with respect to the outer body,
   wherein the vent hole is between adjacent bridges of the plurality of bridges.
Clause 7. The battery pack of clause 6, wherein a distance between the first holder body and the second extension part is greater than a distance between the first holder body and the inner body.
Clause 8. The battery pack of clause 6 or clause 7, wherein a length of the second extension part is greater than or equal to 1 mm and less than or equal to 3 mm.
Clause 9. The battery pack of any one of clauses 6 to 8, wherein a width of the third extension part is less than a diameter of the inner body.
Clause 10. The battery pack of clause 9, wherein an end portion of the third extension part is on the inner body.
Clause 11. The battery pack of any one of clauses 6 to 10, wherein the guide comprises:
   a chamber between the first holder body and the connection tab; and
   a slit extending through the connection tab and connected to the chamber and the transfer hole.
Clause 12. The battery pack of clause 11, wherein opposite sides of the chamber are open and connected to the transfer hole.
Clause 13. The battery pack of clause 11 or clause 12, wherein the slit extends such that a longitudinal direction thereof is parallel to a longitudinal direction of the connection tab.
Clause 14. The battery pack of any one of clauses 11 to 13, wherein a width of the slit is greater than or equal to 0.8 mm and less than or equal to 1.2 mm.
Clause 15. The battery pack of any one of clauses 11 to 14, wherein the slit comprises:
   a first slit passing through the first extension part;
   a second slit connected to the first slit and passing through the second extension part; and
   a third slit connected to the second slit and passing through the third extension part.
Clause 16. The battery pack of clause 15, wherein an end portion of the first slit faces the outer body.
Clause 17. The battery pack of any one of clauses 1 to 16, further comprising:
   a second holder spaced apart from the first holder and configured to support another side of each of the battery cells; and
   a protective member between the first holder and the second holder and arranged around each of the battery cells.
Clause 18. The battery pack of clause 17, wherein the protective member comprises:
   a first protective member extending from the first holder toward the second holder; and
   a second protective member extending from the second holder toward the first holder and in contact with the first protective member.
Clause 19. The battery pack of any one of clauses 1 to 18, further comprising a plurality of blocking members each facing a battery cell of the plurality of battery cells and configured to cover the vent hole.
Clause 20. The battery pack of clause 19, wherein each of the blocking members is separated from the vent hole as the emission is discharged from the vent hole.

## Claims

1. A battery pack comprising:
a housing;
a plurality of battery cells in the housing and each comprising a vent hole;
a first holder in the housing and configured to support a side of each of the battery cells;
a first connection member facing the first holder and electrically connected to the battery cells; and
a guide in the first connection member and configured to guide a flow of an emission discharged from the vent hole.

2. The battery pack as claimed in claim 1, wherein the first holder comprises:
a first holder body;
a plurality of first insertion holes, which pass through the first holder body and in which the battery cells are respectively inserted; and
a transfer hole passing through the first holder body, connected to the first insertion hole, and facing the vent hole.

3. The battery pack as claimed in claim 2, wherein the first holder body comprises:
a first partition around the first insertion hole; and
a second partition extending from the first partition and arranged around the transfer hole,
wherein the second partition protrudes outward from a battery cell of the plurality of battery cells.

4. The battery pack as claimed in claim 3, wherein each of the battery cells comprises:
a cell case accommodating an electrode assembly; and
a cap-up which is coupled to the cell case and in which the vent hole extends, and
the first connection member comprises:
a tab body seated on the first holder body; and
a connection tab extending from the tab body and connected to the cap-up.

5. The battery pack as claimed in claim 4, wherein the connection tab comprises:
a first extension part extending from the tab body and facing the transfer hole;
a second extension part extending from the first extension part and inserted in the transfer hole; and
a third extension part extending from the second extension part and in contact with the cap-up.

6. The battery pack as claimed in claim 5, wherein the cap-up comprises:
an inner body;
an outer body arranged coaxially with the inner body; and
a plurality of bridges between the inner body and the outer body and configured to support the inner body with respect to the outer body,
wherein the vent hole is between adjacent bridges of the plurality of bridges.

7. The battery pack as claimed in claim 6, wherein a distance between the first holder body and the second extension part is greater than a distance between the first holder body and the inner body.

8. The battery pack as claimed in claim 6 or claim 7, wherein a length of the second extension part is greater than or equal to 1 mm and less than or equal to 3 mm.

9. The battery pack as claimed in any one of claims 6 to 8, wherein a width of the third extension part is less than a diameter of the inner body.

10. The battery pack as claimed in claim 9, wherein an end portion of the third extension part is on the inner body.

11. The battery pack as claimed in any one of claims 6 to 10, wherein the guide comprises:
a chamber between the first holder body and the connection tab; and
a slit extending through the connection tab and connected to the chamber and the transfer hole.

12. The battery pack as claimed in claim 11, wherein opposite sides of the chamber are open and connected to the transfer hole.

13. The battery pack as claimed in claim 11 or claim 12, wherein the slit comprises:
a first slit passing through the first extension part;
a second slit connected to the first slit and passing through the second extension part; and
a third slit connected to the second slit and passing through the third extension part.

14. The battery pack as claimed in any one of claims 1 to 13, further comprising:
a second holder spaced apart from the first holder and configured to support another side of each of the battery cells; and
a protective member between the first holder and the second holder and arranged around each of the battery cells.

15. The battery pack as claimed in any one of claims 1 to 14, further comprising a plurality of blocking members each facing a battery cell of the plurality of battery cells and configured to cover the vent hole.
